# EUROPÄISCHE PATENTSCHRIFT

(11) **EP 0 454 620 B1**
(45) Veröffentlichungstag und Bekanntmachung des Hinweises auf die Patenterteilung: **10.11.1993**
(21) Anmeldenummer: 91810281.5
(22) Anmeldetag: 16.04.1991
(51) Int. Cl.: B23K 26/00, B23K 37/04

(54) **Verfahren und Anlage zum Schneiden von Flachmaterial**
Method and device for cutting of flat materials
Méthode et dispositif pour le découpage de matériaux plats

(30) Priorität: 23.04.1990 CH 1360/90
(43) Veröffentlichungstag der Anmeldung: 30.10.1991
(73) Patentinhaber: Bystronic Laser AG, CH-3362 Niederönz (CH)
(72) Erfinder: Zumstein, Ernst, CH-3400 Burgdorf (CH)
(74) Vertreter: AMMANN PATENTANWAELTE AG BERN

(56) Entgegenhaltungen:
- US-A- 3 848 104
- US-A- 4 383 168

## Beschreibung

Die Vorliegende Erfindung betrifft ein Verfahren gemäss Oberbegriff des Anspruchs 1 sowie eine Anlage zur Durchführung des Verfahrens. Bei herkömmlichen Verfahren bzw. Anlagen zum Schneiden von Teilen aus Flachmaterial, Blechtafeln, wird das Flachmaterial in horizontaler Lage auf einen Rost von Tragrippen gelegt über welchem ein in Längs- und Querrichtung CNC-gesteuerter Schneidkopf angeordnet ist. Hierbei ergeben sich Probleme, wenn ein Schnitt im Bereiche einer Tragrippe zu führen ist, indem das an der Schnittstelle abgetragene Material nicht frei nach unten austreten, die Tragrippe lokal beschädigt werden oder der Laserstrahl an der Tragrippe reflektiert werden und die Rückseite des Flachmaterials beschädigen kann.

Ziel der Erfindung ist es, bei einem Verfahren der eingangs genannten Art diese Nachteile zu vermeiden, indem das Flachmaterial in etwa senkrechter Lage geschnitten wird. Ist das Flachmaterial senkrecht oder nur leicht geneigt aufgehängt, bedarf es keiner Abstützung desselben an der Rückseite, ohne dass sich das Flachmaterial unter den sehr geringen quer zu seiner Ebene wirkenden Kräften derart verformt, dass an Bearbeitungsgenauigkeit eingebüsst wird. Ein weiterer Vorteil ist die Entsorgung der ausgeschnittenen Teile/Abfälle schon während der Bearbeitung. Die Kollisionsgefahr des Schneidkopfes mit auf dem Auflagerost liegenden verkippten teilen wird eliminiert.

Die Erfindung betrifft auch eine Anlage zur Durchführung des oben genannten Verfahrens gemäss Anspruch 5. Ein besonderer Vorteil dieser Anlage besteht darin, dass freigeschnittene Teile laufend abtransportiert werden, was die Bearbeitung vereinfacht und verkürzt.

Es ist zwar bekannt, ohnehin in senkrechter Lage eingebautes Material thermisch zu schneiden oder in senkrechter Lage gehaltenes Material thermisch zu bearbeiten (US-A-3,484,104 und 4,383,168), doch war damit nicht die serienmässige Herstellung von Teilen durch thermisches Ausschneiden derselben aus etwa senkrecht gehaltenem Flachmaterial angeregt.

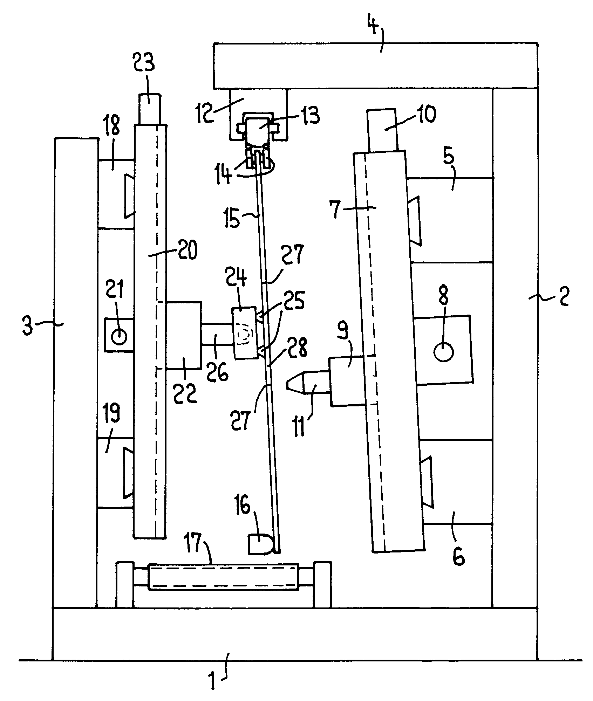

Die Erfindung wird nun anhand einer in der Zeichnung schematisch dargestellten Stirnansicht einer erfindungsgemässen Schneidanlage näher erläutert.

Das Maschinengestell weist eine Basis 1 seitliche Tragkontruktionen 2 und 3, sowie einen oberen Träger 4 auf. An der vertikalen Tragkonstruktion 2 ist mittels zweier Führungen 5 und 6 eine Schneidbrücke 7 in Längsrichtung, d.h. senkrecht zur Zeichnungsebene, verstellbar. Die Verstellung kann mittels einer Spindel 8 und eines numerisch gesteuerten, nicht dargestellten Motors erfolgen. Die Schneidbrücke 7 ist leicht geneigt und zwar beispielsweise um 3° gegenüber einer Senkrechten. Längs der Schneidbrücke 7 ist ein Schlitten 9 mittels eines Motors 10 und einer nicht dargestellten Spindel verschiebbar. Am Schlitten 9 ist ein Schneidkopf 11, beispielsweise ein Laser-Schneidkopf, verstellbar angebracht. Die Spindelantriebe können auch durch andere ev. besser geeignete Antriebe ersetzt werden.

Am Träger 4 ist eine Längsführung 12 befestigt, längs welcher ein Greifer 13 mit Greifbacken 14 geführt ist. In Längsrichtung der Führung 12 können mehrere derartige Greifer angeordnet sein, welche mit ihren Greifbacken 14 den oberen Rand einer Flachmaterialplatte 15, beispielsweise einer Blechtafel halten. Der untere Rand der Platte 15 liegt an einer Stützleiste oder Führung 16 an, derart dass die Platte 15 gegenüber einer Senkrechten leicht geneigt ist, und zwar vorzugsweise um denselben Betrag wie die Schneidbrücke 7.

Unterhalb der Führung 16 ist ein Förderband 17 angeordnet, welches dazu dienen kann aus der Platte 15 freigeschnittene Teile oder Abfälle in Längsrichtung aus dem Bearbeitungsbereich abzuführen.

An der senkrechten Tragkonstruktion 3 ist mittels zweier Führungen 18 und 19 eine Brücke 20 längsverschiebbar geführt. Sie kann mittels einer Spindel 21 und eines nicht dargestellten Motors in Längsrichtung eingestellt werden. Längs der Brücke 20 ist ein Schlitten 22 mittels eines Motors 23 verstellbar. Am Schlitten 22 ist ein Austraggreifer 24 angebracht, der z.B. mit Saugnäpfen 25 ausgestattet ist. Es ist angenommen, dass der Greiferkopf 24 an seinem Träger 26 schwenkbar angeordnet ist, um sich der Neigung der Platte 15 anpassen zu können. Der Greifer 24, 25 dient dazu, freigeschnittene Teile abzutransportieren.

Die Arbeitsweise der dargestellten Anlage ergibt sich weitgehend aus der vorstehenden Beschreibung. Mittels Traggreifern 13 können Flachmaterialplatten längs der Führung 12, welche als Transportbahn ausgebildet sein kann, aus einem Lager in die dargestellte Bearbeitungsposition im Bewegungsbereiche des Schneidkopfes 11 bzw. des Greifers 24 gebracht werden. Die Lagerung und der Antransport der Platten 15 ist hierbei besonders einfach und platzsparend, weil die Platten in senkrechter Stellung gelagert und transportiert werden können. Mittels des Schneidkopfes 11 werden in an sich bekannter Weise Teile aus der Platte 15 freigeschnitten, wobei die korrekte Distanz des Schneidkopfes 11, insbesondere Laserskopfes 11 von der Platte 15 laufend automatisch geregelt wird. In der Zeichnung sind Schnittstellen 27 angedeutet. Es ist ersichtlich, dass sich diese Schnittstellen ausserhalb irgendwelcher Stützorgane an der Rückseite der Platte 15 befinden, so dass der Schneidvorgang in keiner Weise behindert ist. Bevor ein Teil 28 völlig freigeschnitten ist, wird der Greifer 24 gegen den Teil angelegt und festgesaugt, so dass der Teil nach dem Freischneiden wegtransportiert werden kann. Es ist klar, dass der Greifer 24 gewisse Dimensionen hat, so dass sehr kleine Teile nicht mit diesem Greifer erfasst und wegtransportiert werden können. Kleine Teile kann man aber im allgemeinen ohne Nachteil nach dem Freischneiden auf das Transportband 17 fallen lassen, von welchem sie abtransportiert werden. Die geringe Neigung der Platte 15 führt dazu, dass die Teile in bestimmter Richtung, bezüglich des Schneidkopfes 11 nach hinten, ausfallen und auf das Transportband 17 gelangen. Nach dem Ausschneiden aller Teile kann das Restgitter der Platte 15 mittels der Greifer 13 bzw. der Transportkette mit den Greifern 13 aus dem Bearbeitungsbereich abtransportiert werden und es kann zugleich eine neue Platte in den Bearbeitungsbereich gebracht werden.

Es sind verschiedene Ausführungsvarianten möglich. Für bestimmte Zwecke braucht kein Greifer 24 vorhanden zu sein. Die Brücke 20 könnte ebenfalls geneigt sein und parallel zur Brücke 7 bzw. zur Platte 15 stehen. Im Hinblick auf die geringe Neigung der Platte 15 könnte aber auch die Schneidbrücke 7 senkrecht stehen, dader Abstand des Schneidkopfes 11 von der Platte 15 ohnehin automatisch geregelt wird. Die Tatsache, dass die Platte 15 an der Rückseite frei zugänglich ist, könnte auch dazu benutzt werden, um auf der Rückseite dem Schneidkopf 11 eine Absaugvorrichtung nachzuführen, welche die beim Schneiden entstehenden Rauchgase und Partikel direkt abführt. Es könnte aber auch mit dem Greifer 24 eine Absaughaube verbunden sein, welche so dimensioniert ist, dass sie die beim Schneiden entstehenden Rauchgase und Partikel aufzufangen und abzusaugen und zugleich durchtretendes Licht abzuschirmen vermag. Das Flachmaterial kann auch in senkrechter Lage, frei hängend oder oben gehalten und unten geführt, geschnitten werden. Anstatt ein Restgitter mittels des oder den Greifer 13 abzuführen, könnte man es auch auf das Förderband 17 fallen lassen und mittels desselben abtransportieren. Eine Stahlplatte könnte auch an Magneten aufgehängt sein, und/oder eine genügend starre Platte könnte nur unten auf eine Führung abgestützt sein, in welchen Fällen Schnitte bis praktisch an den Plattenrand geführt werden können. Aehnlich wie der Greifer 24 könnte auch der Schneidkopf 11 oder die Schneidbrücke 7 in der Neigung verstellbar sein.

## Patentansprüche

1. Verfahren zum Herstellen von aus Flachmaterial (15) freigeschnittenen Teilen (28) durch thermisches Schneiden, insbesondere Laser-Schneiden, unter numerischer Steuerung, dadurch gekennzeichnet, dass das Flachmaterial (15) in mindestens annähernd senkrechter Lage geschnitten wird.

2. Verfahren nach Anspruch 1, dadurch gekennzeichnet, dass das Flachmaterial (15) in von der senkrechten Lage abweichender Lage geschnitten wird, wobei man freigeschnittene Teile (28) ausfallen lässt.

3. Verfahren nach Anspruch 1, dadurch gekennzeichnet, dass freigeschnittene Teile (28) durch einen Greifer (24) entfernt werden.

4. Verfahren nach einem der Ansprüche 1 - 3, dadurch gekennzeichnet, dass beim Schneiden entstehende Rückstände an der Schnittstelle abgeführt werden.

5. Anlage zur Durchführung des Verfahrens nach Anspruch 1, insbesondere Laser-Schneidanlage mit einem numerisch gesteuerten Schneidkopf, gekennzeichnet durch Haltemittel (13) zum Aufhängen und/oder Stützen des Flachmaterials (15) in mindestens annähernd senkrechter Lage, durch einen in einer mindestens annähernd senkrechten Ebene bewegbaren Schneidkopf (11), und durch Fördermittel (17, 24) zum Abtransport freigeschnittener Teile (28).

6. Anlage nach Anspruch 5, dadurch gekennzeichnet, dass Trag-Greifer (13, 14) für das Flachmaterial (15) bewegbar sind, um Flachmaterial (15) zuzuführen, in Bearbeitungsstellung zu halten und eventuell Materialreste abzuführen.

7. Anlage nach Anspruch 5 oder 6, gekennzeichnet durch ein unter dem Bearbeitungsbereich angeordnetes Förderband (17) zum Abtransport von freigeschnittenen Teilen (28) und/oder Materialresten.

8. Anlage nach einem der Ansprüche 5 - 7, gekennzeichnet durch einen Austrag-Greifer (24) zum Erfassen und Abführen freigeschnittener Teile (28), der dem Schneidkopf (11) gegenüber angeordnet und im Arbeitsbereich des Schneidkopfes (11) verstellbar ist.

9. Anlage nach Anspruch 8, dadurch gekennzeichnet, dass dem Austrag-Greifer (24) eine Absaugvorrichtung für Schneidprodukte, insbesondere Rauchgase, zugeordnet und mit dem Austrag-Greifer zur jeweiligen Schneidstelle bewegbar ist.

10. Anlage nach Anspruch 6, gekennzeichnet durch eine untere Führung (16) oder Stützleiste zum Stützen von Flachmaterial in geneigter Lage.

## Claims

1. Method of manufacturing of pieces (28) cut from a flat material (15) by thermal cutting, more particularly by laser cutting under numerical control, characterized in that the flat material (15) is cut in a position at least approximately vertical.

2. Method according to claim 1, characterized in that the flat material (15) is cut in a position different from the vertical, and in that one drops the pieces being cut (28).

3. Method according to claim 1, characterized in that the cut pieces (28) are removed by a grip (24).

4. Method according to one of the claims 1 - 3, characterized in that at the time of cutting, the refuses produced at the location of the cutting are removed.

5. Installation for carrying out the method according to claim 1, more particularly laser cutting installation, with a cutting head numerically controlled, characterized by transporting means (13) for suspending and/or supporting the flat material (15) in a position at least approximately vertical and by transporting means (17, 24 for removing the cut pieces (28).

6. Installation according to claim 5, characterized in that the grips (13, 14) for the flat material (15) are movable in order to lead the flat material (15), to hold it in working position and possibly to remove rests of the material.

7. Installation according to claim 5 or 6, characterized by a transporting band (17) arranged under the working region for removing the cut pieces (28) and/or rests of the material.

8. Installation according to one of the claims 5 - 7, characterized by an unloading grip (24) for taking and removing the cut pieces (28), grip which faces the cutting head (11) and is adjustable in the region of working of the cutting head.

9. Installation according to claim 8, characterized in that the unloading grip (24) is associated to a suction device for the products of the cutting, particularly burnt gases, and displaceable with the unloading grip until each cutting location.

10. Installation accoring to claim 6, characterized by a lower guide or supporting list (16) for supporting the flat material in inclined position.

## Revendications

1. Procédé de fabrication de pièces découpées (28) à partir d'un matériau plat (15) par découpage thermique, plus particulièrement par découpage au laser sous commande numérique, caractérisé en ce que le matériau plat (15) est découpé dans une position au moins approximativement verticale.

2. Procédé selon la revendication 1, caractérisé en ce que le matériau plat (15) est découpé dans une position différente de la verticale, et en ce que l'on laisse tomber les pièces découpées.

3. Procédé selon la revendication 1, caractérisé en ce que les pièces découpées (28) sont enlevées par un grappin.

4. Procédé selon l'une de revendications 1 - 3, caractérisé en ce que lors du découpage, les déchets produits à l'endroit de la coupe sont enlevés.

5. Installation pour la mise en oeuvre du procédé selon la revendication 1, en particulier installation de découpage par laser, avec une tête de coupe commandée numériquement, caractérisée par des moyens de support (13) pour suspendre et/ou supporter le matériau plat (15) en position au moins approximativement verticale et par des moyens de transport (17,24) pour enlever les pièces découpées (28).

6. Installation selon la revendication 5, caractérisée en ce que les grappins (13, 14) pour le matériau plat (15) sont mobiles afin d'amener le matériau plat (15), le tenir en position de travail et d'enlever éventuellement des restes de matériau.

7. Installation selon la revendication 5 ou 6, caractérisée par une bande de transport (17) disposée sous la région de travail pour enlever les pièces découpées (28) et/ou des restes de matériau.

8. Installation selon l'une des revendications 5 - 7, caractérisée par un grappin de décharge (24) pour prendre et enlever les pièces découpées (28), grappin qui est disposé vis-à-vis de la tête de découpage (11) et ajustable dans la région de travail de la tête de découpage (11).

9. Installaton selon la revendication 8, caractérisée en ce que le grappin de décharge (24) est associé à un dispositif de succion pour les produits du découpage, en particulier les gaz brûlés, et déplaceable avec le grappin de décharge jusqu'à chaque endroit de découpage.

10. Installation selon la revendication 6, caractérisée par un guide inférieur ou liste support (16) pour supporter le matériau plat en position inclinée.
